(19) Europäisches Patentamt / European Patent Office / Office européen des brevets

(11) **EP 3 678 289 A1**

(12) **EUROPEAN PATENT APPLICATION**
published in accordance with Art. 153(4) EPC

(43) Date of publication:
**08.07.2020 Bulletin 2020/28**

(51) Int Cl.:
***H02M 7/49*** *(2007.01)*

(21) Application number: **18850922.8**

(22) Date of filing: **22.02.2018**

(86) International application number:
**PCT/JP2018/006402**

(87) International publication number:
**WO 2019/043993 (07.03.2019 Gazette 2019/10)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD TN**

(30) Priority: **28.08.2017 PCT/JP2017/030737**

(71) Applicants:
• **Kabushiki Kaisha Toshiba**
 **Minato-ku**
 **Tokyo 105-8001 (JP)**
• **Toshiba Energy Systems & Solutions Corporation**
 **Kawasaki-shi, Kanagawa 212-0013 (JP)**

(72) Inventors:
• **ARAI, Takuro**
 **Tokyo 105-8001 (JP)**
• **KOYAMA, Yushi**
 **Tokyo 105-8001 (JP)**
• **SEKIGUCHI, Kei**
 **Tokyo 105-8001 (JP)**
• **KANEKO, Takahiro**
 **Tokyo 105-8001 (JP)**
• **SUZUKI, Daichi**
 **Tokyo 105-8001 (JP)**

(74) Representative: **AWA Sweden AB**
 **Junkersgatan 1**
 **582 35 Linköping (SE)**

(54) **POWER CONVERSION DEVICE, POWER CONVERSION SYSTEM, AND METHOD FOR USING POWER CONVERSION SYSTEM**

(57) A power conversion device of embodiments includes arms corresponding to each of three phases. Each arm includes a positive-side arm, a first primary winding, a negative-side arm, and a second primary winding. In the positive-side arm, a plurality of converters including a plurality of switching elements connected in series and a capacitor connected in parallel to the plurality of switching elements connected in series are connected with each other in series, and one end of the positive-side arm is connected to a positive-side DC terminal. The first primary winding is provided between the other end of the positive-side arm and a neutral point, and is magnetically coupled with a secondary winding of a corresponding phase. In the negative-side arm, the plurality of converters are connected with each other in series and one end of the negative-side arm is connected to a negative-side DC terminal. The second primary winding is provided between the other end of the negative-side arm and the neutral point, and is magnetically coupled with the secondary winding common to the first primary winding. The neutral points of the each arm are connected with each other and grounded.

FIG. 1

**Description**

[Technical Field]

Embodiments of the present invention relates to a power conversion device, a power conversion system, and a method of using the power conversion system.

[Background Art]

Power conversion devices that mutually convert power between alternating current and direct current are used for various applications. Among these power conversion devices, a power conversion device used for an application in which a voltage on a DC side (DC voltage) is a high voltage may have a multi-level inverter to eliminate a low rating of an insulated gate bipolar transistor (IGBT) that is a switching element with respect to the DC voltage in some cases. Note that examples of applications in which a DC voltage is a high voltage include, for example, power transmission by submarine cables, conversion between 50 [Hz] and 60 [Hz], long-distance direct current transmission from a remote large-scale solar power system to a consumption area, and the like.

A multi-level inverter is configured by a plurality of converters including a switching element and a capacitor in series. In this capacitor, it is necessary to control a voltage value such that it is constant such that charging and discharging are appropriately performed. For this reason, freewheeling current which allows a DC power supply to freewheel needs to flow in the converter all the time, and it is necessary to provide a short-circuit route for performing charging and discharging for each phase.

Here, in a power conversion device for three phases, since three phases are connected to the same DC power supply, if combined DC voltage values of respective phases are slightly different, an excessive short-circuit current flows between the phases, and it may affect a device. Even if mean values of the DC voltage combined values of respective phases coincide with each other, a similar problem may occur if the on-off timings and cycles are different. To cope with this problem, a buffer reactor may be inserted in each phase to add a limit to prevent the short-circuit current from being excessive. However, in this case, the size and costs of an entire device are increased.

Based on such a background, a multi-level inverter in which a secondary winding is shared by the positive-side arm and the negative-side arm, and connection points (neutral points) of positive-side and negative-side primary windings are connected between phases has been developed. However, a technology that takes insulation withstand voltages of components into account in this configuration has not been disclosed.

[Citation List]

[Patent Literature]

[Patent Literature 1]
Japanese Patent No.5881386

[Summary of Invention]

[Technical Problem]

An object of the present invention is to provide a power conversion device, a power conversion system, and a method of using the power conversion system which can make it possible to use components with low insulation withstand voltages while curbing an increase in size and costs of a device.

[Solution to Problem]

A power conversion device of embodiments includes arms corresponding to each of three phases. Each arm includes a positive-side arm, a first primary winding, a negative-side arm, and a second primary winding. In the positive-side arm, a plurality of converters including a plurality of switching elements connected in series and a capacitor connected in parallel to the plurality of switching elements connected in series are connected with each other in series, and one end of the positive-side arm is connected to a positive-side DC terminal. The first primary winding is provided between the other end of the positive-side arm and a neutral point, and is magnetically coupled with a secondary winding of a corresponding phase. In the negative-side arm, the plurality of converters are connected with each other in series and one end of the negative-side arm is connected to a negative-side DC terminal. The second primary winding is provided between the other end of the negative-side arm and the neutral point, and is magnetically coupled with the secondary winding common to the first primary winding. The neutral points of the each arm are connected with each other and grounded

[Brief Description of Drawings]

FIG. 1 is a configuration diagram of a power conversion device 1 according to a first embodiment.
FIG. 2 is a configuration diagram of a converter C.
FIG. 3 is a diagram which shows an example of a structure of a transformer 50.
FIG. 4 is a diagram for describing an operation principle of a power conversion device 1.
FIG. 5 is a diagram for describing the operation principle of the power conversion device 1.
FIG. 6 is a diagram for describing the operation principle of the power conversion device 1.
FIG. 7 is a configuration diagram of a power conversion device 1A of a modified example 1.
FIG. 8 is a configuration diagram of a power conversion device 1B of a modified example 2.
FIG. 9 is a configuration diagram of a power conversion device 1C of a modified example 3.
FIG. 10 is a configuration diagram of a power conversion device 1D of a modified example 4.
FIG. 11 is a configuration diagram of a power conversion device 1E of a modified example 5.
FIG. 12 is a diagram which shows a usage example of the power conversion device according to the first embodiment.
FIG. 13 is a flowchart which shows an example of a flow of a work procedure at the time of starting an operation of a power conversion system shown in FIG. 12.
FIG. 14 is a flowchart which shows another example of the flow of the work procedure at the time of starting the operation of the power conversion system shown in FIG. 12.
FIG. 15 is a configuration diagram of a power conversion device 2 according to a second embodiment.
FIG. 16 is a diagram which shows a usage example of the power conversion device 2 according to the second embodiment.

[Description of Embodiments]

Hereinafter, a power conversion device, a power conversion system, and a method of using the power conversion system of embodiments will be described with reference to the drawings.

<First embodiment>

[Configuration]

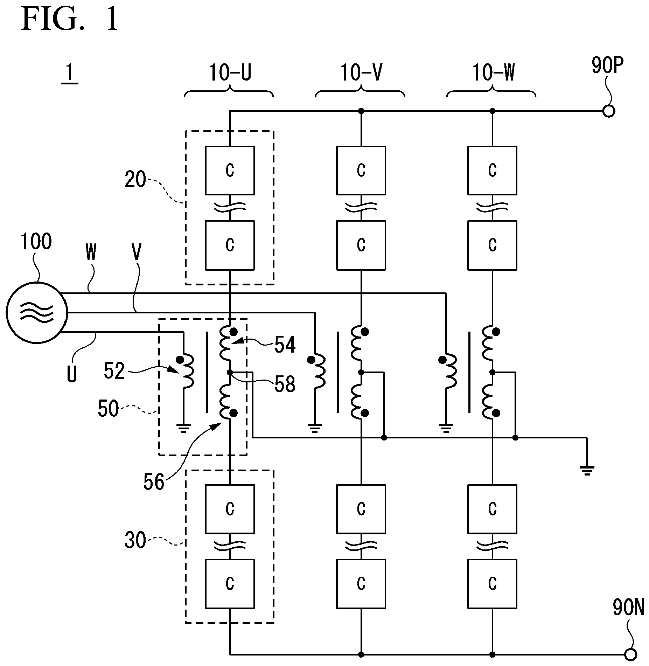

FIG. 1 is a configuration diagram of a power conversion device 1 according to a first embodiment. The power conversion device 1 is connected between an AC system 100 of three phases and a DC system (not shown), and performs conversion between alternating current and direct current. The power conversion device 1 of the embodiment includes, for example, arms 10-U, 10-V, and 10-W for each of the three phases of U, V, and W. Each arm can have the same configuration. In FIG. 1, constituent elements belonging to the arm 10-U are representatively denoted by reference numerals. In the following description, arms of each phase are not distinguished from each other and collectively referred to as arms 10.

The arms 10 include, for example, a positive-side arm 20, a negative-side arm 30, and a transformer 50.

In the positive-side arm 20, a plurality of converters C are connected in series with each other. A configuration of the converter C will be described below. Among the plurality of converters C connected in series, one corresponding to one end of the positive-side arm 20 is connected to a positive-side DC terminal 90P and one corresponding to the other end is connected to a positive-side primary winding (DC side winding) 54 of the transformer 50.

In the negative-side arm 30, a plurality of converters C are connected in series with each other. Among the plurality of converters C connected in series, one corresponding to one end of the negative-side arm 30 is connected to a negative-side DC terminal 90N and one corresponding to the other end is connected to a primary winding 56 on a negative side of the transformer 50.

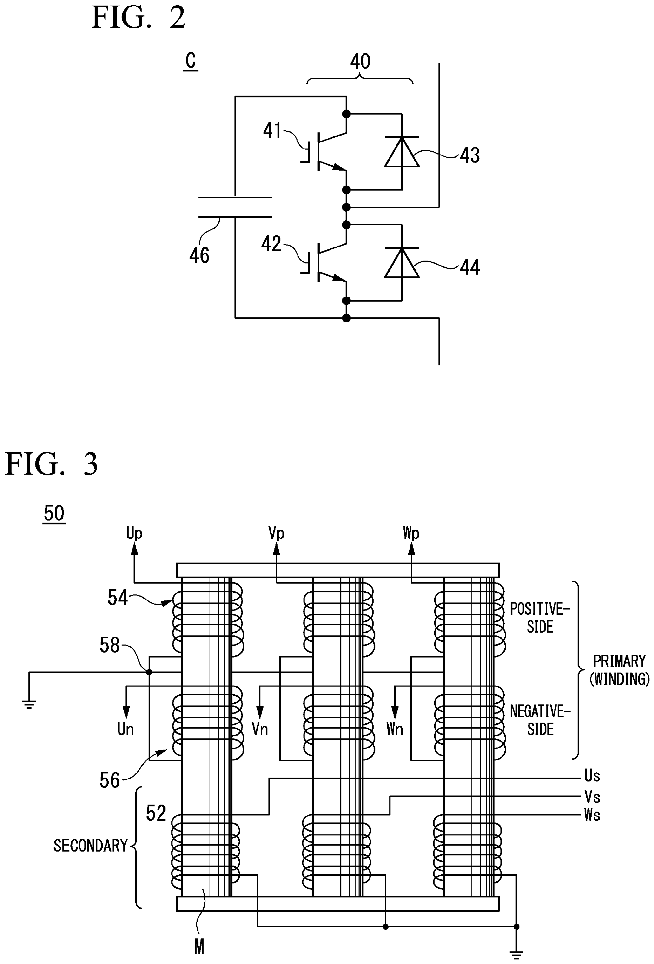

FIG. 2 is a configuration diagram of the converter C. The converter C is, for example, a chopper unit converter. The converter C is formed by connecting, for example, a leg 40 and a capacitor 46 in parallel. The leg 40 is formed by connecting two switching elements 41 and 42 each having a self-extinguishing capability in series. The switching elements 41 and 42 are, for example, IGBT. A diode 43 is connected in anti-parallel to the switching element 41, and a diode 44 is connected in anti-parallel to the switching element 42. Diodes 43 and 44 are freewheeling diodes.

The transformer 50 is a single phase transformer for insulation in which a positive-side primary winding (a first primary winding) 54 and a negative-side primary winding (a second primary winding) 56 are magnetically coupled with a secondary winding (AC side winding) 52, respectively. A winding ratio between the secondary winding 52 and the two primary windings 54 and 56 is, for example, 1:1. Note that the positive sides of the secondary winding 52 and the primary windings 54 and 56 are indicated by black dots in FIG. 1.

The positive side of the secondary winding 52 is connected to an AC system 100 side as a connection end of a corresponding phase. Negative sides (neutral points) of the secondary winding 52 are short-circuited and connected with each other, and grounded. A negative side of the positive-side primary windings 54 and a negative side of the negative-side primary winding 56 are connected with each other. This connection point is referred to as a neutral point 58. Neutral points of respective phases are short-circuited and connected with each other and grounded.

With this configuration, a leakage inductance component on a primary side of the transformer 50 can be caused to function as a reactor. In the transformer, a leakage magnetic flux due to magnetic leakage is surely present. This leakage magnetic flux acts as leakage inductance of primary and secondary side windings without contributing to a transformation action. In the present embodiment, when a DC circulation current flows, primary windings 54 and 56 of the transformer 50 serving as an insulation transformer are routes of the DC circulation current. For this reason, leakage inductance components of the primary windings 54 and 56 of the transformer 50, like the reactor, curb a rapid increase of the DC circulation current. In the power conversion device 1, since the reactor can be omitted or reduced in size, it is possible to curb an increase in size and costs of the device.

In addition, the power conversion device 1 has a configuration in which a plurality of converters C are connected with each other in series, and the output waveform can be approximated to a sine wave and harmonics can be curbed. As a result, since a reactor or a capacitor that curbs a harmonic component can be omitted or reduced in size in the power conversion device 1, it is possible to curb an increase in size and costs of the device.

Moreover, since the power conversion device 1 connects and grounds the neutral point 58 of each phase, an upper limit of the ground potential in the device is limited. As a result, it is possible to use components with low insulation withstand voltages.

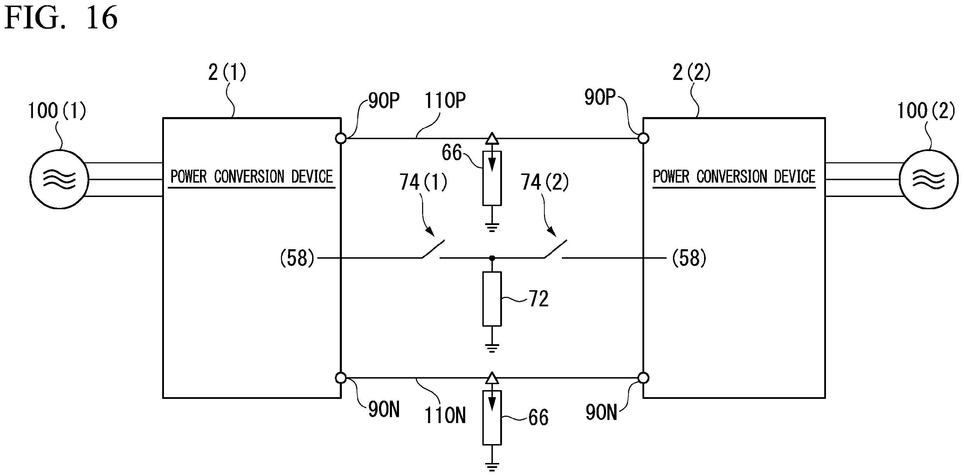

In addition, since the neutral points 58 of each phase are connected and grounded, and thereby potentials of the DC terminals 90P and 90N are positive and negative symmetrical, for example, voltages generated at the DC terminals 90P and 90N of the power conversion device 1 can be halved as compared to when 90N is grounded. As a result, not only the arm 20 and the arm 30 but also, for example, a withstand voltage of the lightning arrestor connected to 90P and 90N of FIG. 16 to be described below can be halved.

FIG. 3 is a diagram which shows an example of a structure of the transformer 50. In the transformer 50, for example, the primary windings (54 and 56) and the secondary winding (52) are wound around a common iron core M. In addition, the negative sides of the secondary winding 52 in each phase are connected to each other between three phases and grounded. With such a configuration, it is possible to obtain an effect that DC magnetic fluxes of each phase are mutually canceled. In addition, since the device is constituted by a three-phase transformer or the like, it is possible to reduce the device in size. Note that the power conversion device 1 may have a configuration in which the negative sides of the secondary winding 52 are not connected between the phases. In addition, the transformers 50 of each phase may be disposed in individual portions instead of being integrally formed as shown in FIG. 3.

[Operation principle]

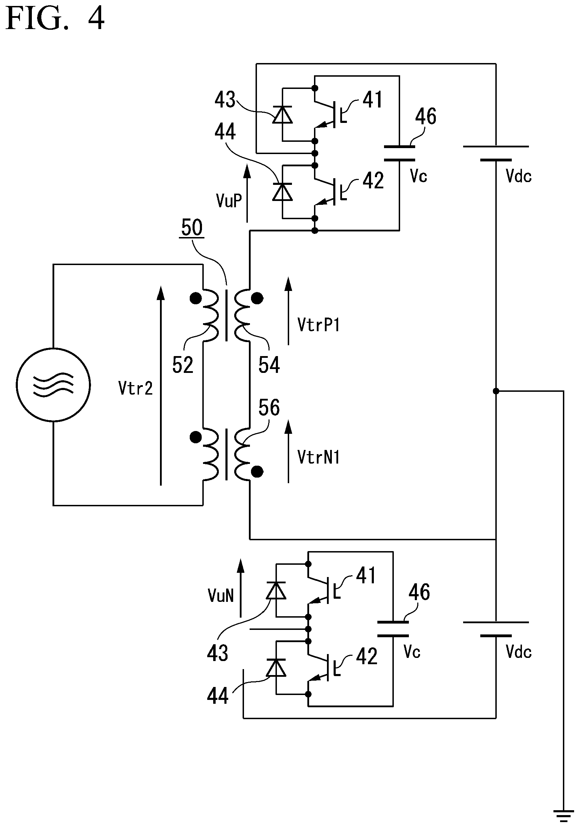

Hereinafter, an operation principle of the power conversion device 1 will be simply described. Here, the number of the converters C in the positive-side arm 20 and the negative-side arm 30 is set to one to simplify the description. FIGS. 4 to 6 are diagrams for describing the operation principle of the power conversion device 1.

Parameters are defined as described below.

Vu···a voltage of an AC output point viewed from a ground point
Vdc···positive and negative voltages of the DC power supply
Vc···a voltage of the capacitor 46 of a converter C
VuP···an output voltage of a converter C connected to a positive side power supply side
VuN···an output voltage of a converter C connected to a negative side power supply side
VuRef···an AC voltage command to be output, which is arithmetically operated in a higher system

In this case, the output voltage VuP of a positive side converter C is expressed by Equation (1).

$$VuP=Vdc-VuRef \cdots(1)$$

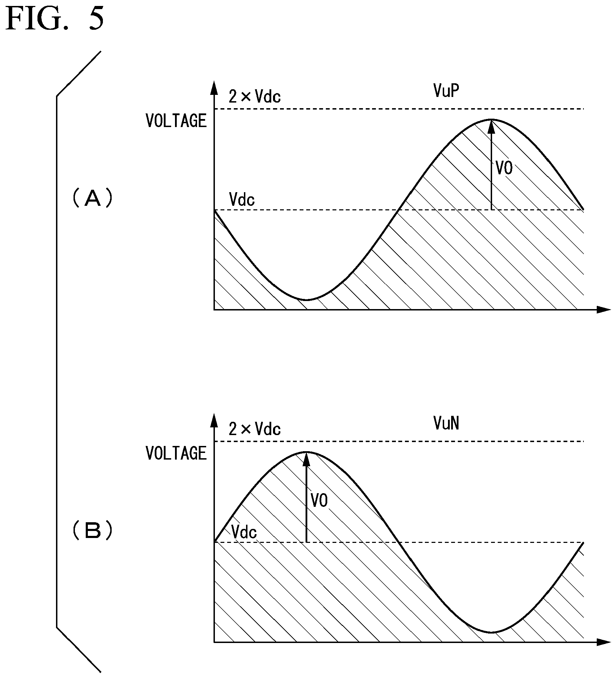

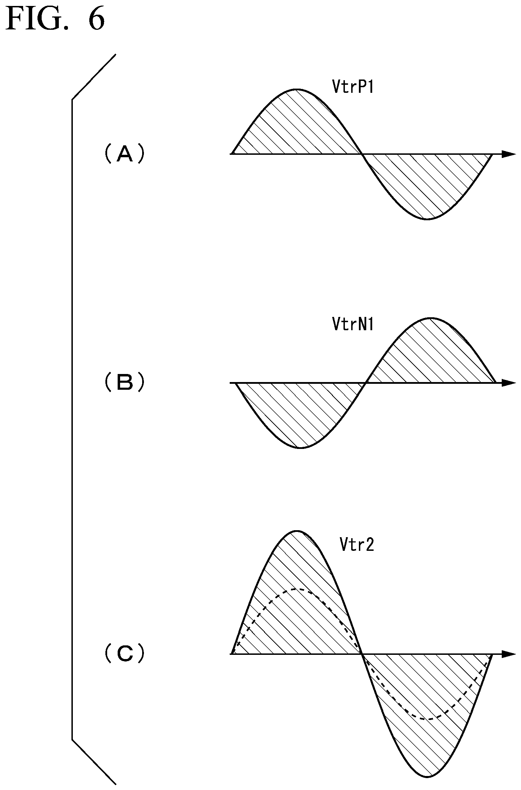

A voltage waveform of VuP is expressed in FIG. 5(A). In addition, a waveform of a voltage VtrP1 of the positive-side primary winding 54 is expressed in FIG. 6(A).

If these are used, the output voltage Vu of the power conversion device 1 is expressed by Equation (2).

$$Vu=Vdc-VuP=Vdc-(Vdc-VuRef)=VuRef \cdots (2)$$

On the other hand, the output voltage VuN of a negative-side converter C is expressed by Equation (3).

$$VuN=Vdc-VuRef \cdots (3)$$

A voltage waveform of this VuN is expressed in FIG. 5(B). In addition, a waveform of a voltage VtrN1 of the negative-side primary winding 56 is expressed in FIG. 6(B).
If these are used, the output voltage Vu is expressed by Equation (4).

$$Vu=-Vdc+VuN=-Vdc+(Vdc-VuRef)=-VuRef \cdots (4)$$

Since a positive side of the transformer 50 has a subtractive polarity and a negative side of the transformer 50 has an additive polarity, a voltage Vtr2 synthesized on a secondary side is output as shown in FIG. 6(C).
If an AC load current is set as Iu, this Iu flows to each of a positive-side converter C and a negative-side converter C. At this time, the capacitor 46 of the positive-side converter C is charged or discharged with power PowerP expressed by Equation (5).

$$PowerP=VuP\times Iu=(Vdc-VuRef)\times Iu \cdots (5)$$

If a case in which VuRef and Iu are in phase, that is, they operate with a power factor 1, is calculated, a mean value of PowerP in one AC cycle is negative. That is, if output voltage control as described above is performed, operation cannot be continued because it is difficult to keep a constant mean value of a capacitor voltage of the positive-side converter C.
In a similar manner, for a capacitor voltage of the negative-side converter C, powerN in the case of the power factor 1 has a mean value thereof in one AC cycle which is positive, and operation cannot be continued because it is difficult to keep a constant mean value of the capacitor voltage.
To cope with this, a control device (not shown) causes charge or discharge current using direct current to flow in routes from a positive side of the DC power supply to the positive-side converter C, the positive-side primary winding 54, the negative-side primary winding 56, the negative-side converter C, and a negative side of the DC power supply. As a result, the mean value of the capacitor voltage can be kept constant.
Specifically, a correction value ΔVfcControl for performing control such that the mean value of the capacitor voltage is constant is arithmetically operated according to Equation (6). Then, the output voltages VuP and VuN of the positive-side and negative-side converters C are corrected and output according to this correction value ΔVfcControl. In the equation, VCref is a capacitor voltage command value (a specified value), VCu_AVE is a mean value of capacitor voltages of converters C of the entire arm 10, and G(s) is a control gain. S is a Laplace operator. PI control is suitable for this control.

$$\Delta VfcControl=G(s)\times(VCref-VCu\_AVE) \cdots (6)$$

[Modified example 1]

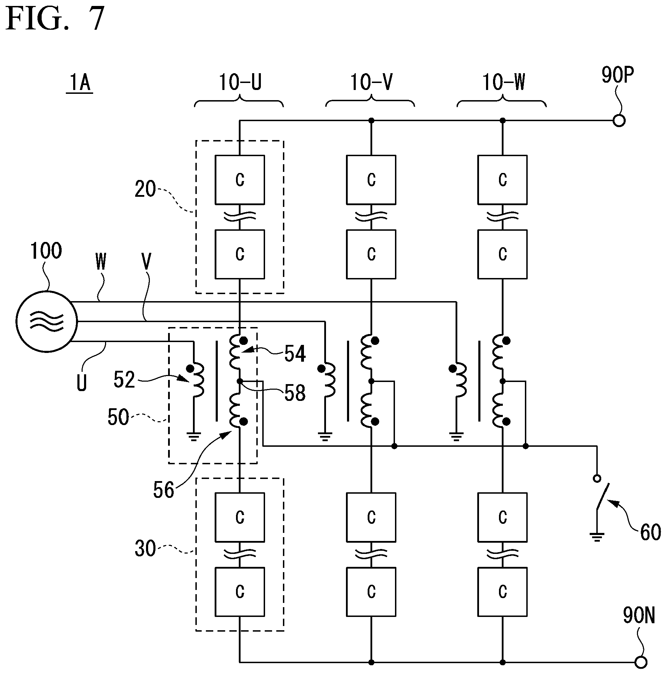

FIG. 7 is a configuration diagram of a power conversion device 1A of a Modified Example 1. In the power conversion device 1A, a portion in which neutral points of respective phases are connected with each other is grounded via the disconnector 60. As a result, the same effects as in the embodiment can be achieved, and, as described below, when grounding is not required, the disconnector 60 can be set to be in a cut-off state (open sate) and operated according to an application.

[Modified example 2]

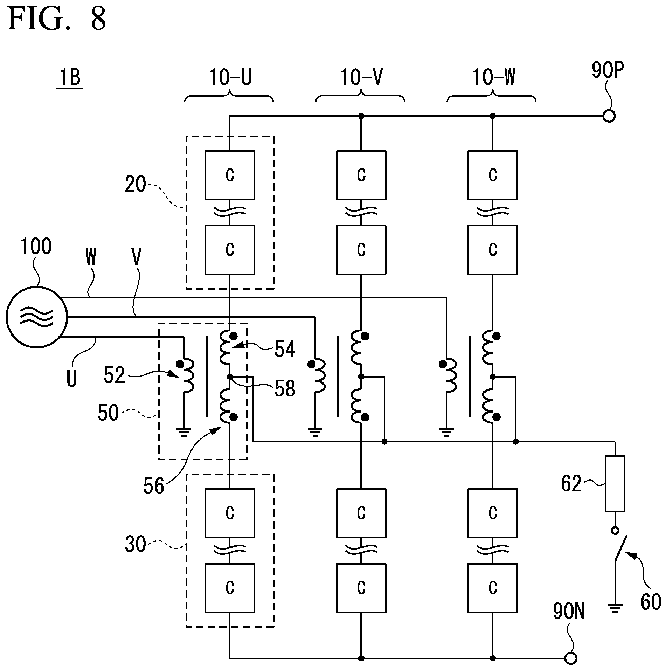

FIG. 8 is a configuration diagram of a power conversion device 1B of a modified example 2. In the power conversion device 1B, a portion in which neutral points of respective phases are connected with each other is grounded via the disconnector 60 and an fault current curbing resistor 62 connected in serial. As a result, the same effects as in the modified example 1 can be achieved, a ground fault occurs in the positive-side DC terminal 90P, for example, when the disconnector 60 is in the conducted state, and, when fault current has flowed through a ground point, the fault current can be curbed. Note that the fault current mainly flows through the diode 44 of the converter C at the time of the ground fault. For this reason, it is desirable to determine a resistance value of the fault current curbing resistor 62 such that fault current, in particular, is within an allowable current resistance value of the diode 44. Moreover, when grounding is not required as described below, the disconnector 60 can be set to be in the cut-off state (open state) and operated according to an application.

[Modified example 3]

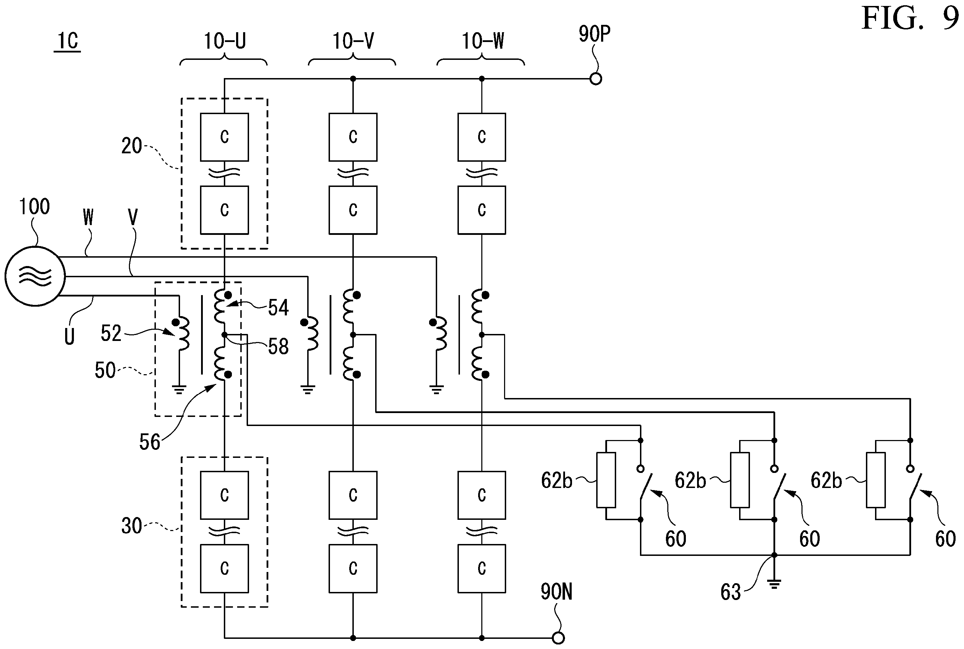

FIG. 9 is a configuration diagram of a power conversion device 1C of a modified example 3. The power conversion device 1C is provided with the disconnector 60 and a charging resistor 62b in the power conversion device 1B of the modified example 2 for each phase, and grounded after connecting the phases at the connection point 63. The disconnector 60 and a charging resistor 62b constitute a charging unit. Each charging resistor 62b installed in this manner can be used at the time of initial charging of a converter connected to each phase. Moreover, according to the modified example 3, the same effects as in the modified example 1 can be achieved and fault current can be curbed in the same manner as in the modified example 2.

[Modified example 4]

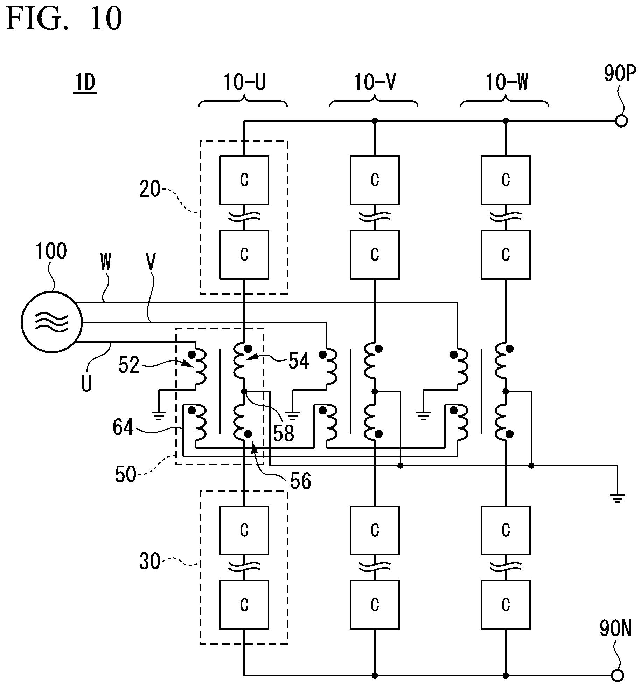

FIG. 10 is a configuration diagram of a power conversion device 1D of a modified example 4. The power conversion device 1D is obtained by adding a stable winding 64 to the power conversion device 1 of the embodiment. The stable winding 64 is delta-connected and causes harmonic current to freewheel to another phase. As a result, it is possible to perform more stable power conversion by preventing unnecessary harmonic current due to a non-linearity of excitation characteristics of a transformer from flowing out to an AC system.

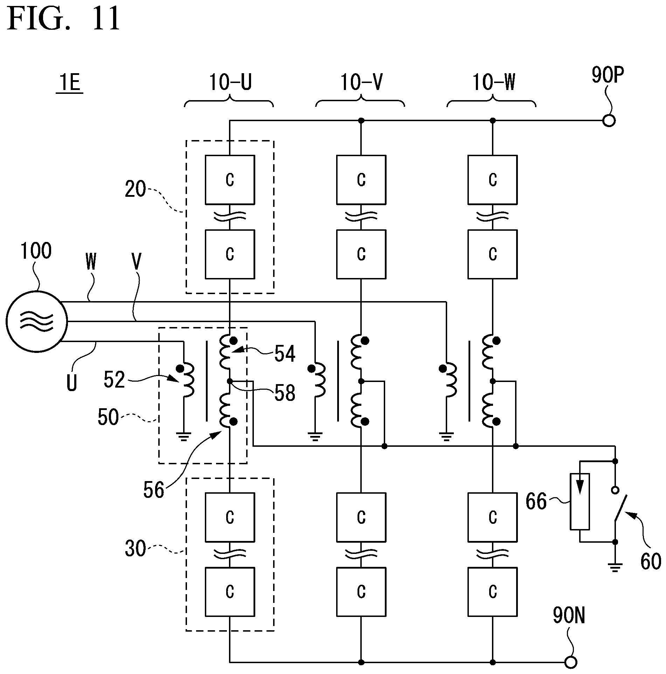

FIG. 11 is a configuration diagram of a power conversion device 1E of a modified example 5. In the power conversion device IE, a portion in which neutral points of respective phases are connected with each other is grounded via the disconnector 60 and an arrester 68. As a result, the same effects as in the embodiment can be achieved, and, even if the disconnector 60 is in the cut-off state when surge current flows, the current can be caused to flow to the ground quickly. As a result, it is possible to improve a protection performance of the device.

[Other modified example]

The embodiments and respective modified examples described above are not mutually exclusive, and can be appropriately combined to be realized. For example, a configuration obtained by adding a stable winding 64 of the modified example 4 to a configuration of the modified example 3 may be adopted.

[Usage example of first embodiment]

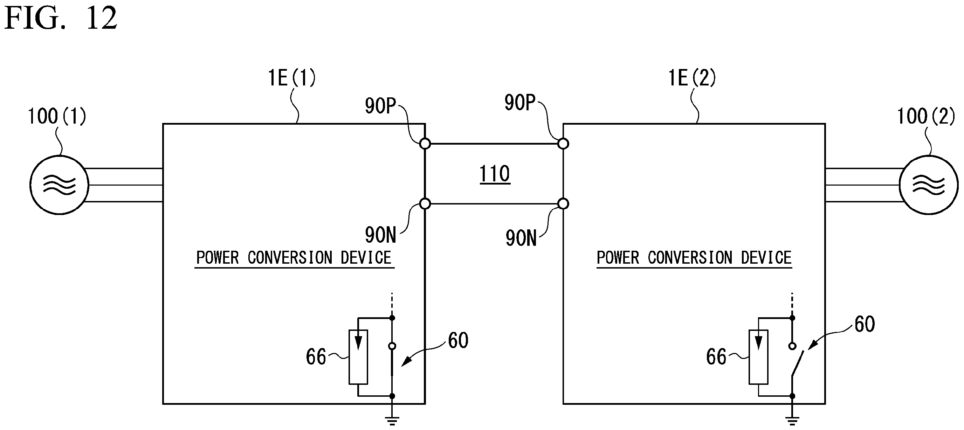

FIG. 12 is a diagram which shows a usage example of the power conversion device according to the first embodiment. The power conversion device used herein may be any one of the power conversion device 1 of the embodiment, the power conversion devices 1A to 1E of each modified example, or a combination thereof, but the power conversion device 1E of the modified example 5 will be representatively used herein.
As shown in FIG. 12, two power conversion devices 1E(1) and 1E(2) are used as a set. A power conversion device 1E(1) is connected to an AC system 100(1) and a power conversion device 1E(2) is connected to an AC system 100(2). The AC system 100(1) and the AC system 100(2) are, for example, two AC system having different frequencies. Then, a positive-side DC terminal 90P of the power conversion device 1E(1) and a positive-side DC terminal 90P of the power conversion device 1E(2) are connected with each other and a negative-side DC terminal 90N of the power conversion device 1E(1) and a negative-side DC terminal 90N of the power conversion device 1E(2) are connected with each other via a DC system 110, respectively. As a result, the power conversion device 1E(1), the DC system 110, and the power conversion device 1E(2) constitute a power conversion system which converts alternating current into alternating current.
In this case, it is preferable that a disconnector 60 of one of the two power conversion devices 1E(1) and 1E(2) be set to be in the conducted state (a closed state) and a disconnector 60 of the other be set to be in the cut-off state. This is because, when the both disconnectors 60 are set to be in the conducted state, a loop line passing through the ground is formed, and thus electrical effects may occur inside both of the power conversion devices. For example, when one AC system is 50 [Hz] and the other AC system is 60 [Hz], or when the systems have the same frequency but different phases, unnecessary current generated by a voltage of this difference flows in the loop line. It is possible to curb occurrence of a related phenomenon by setting the one disconnector 60 to be in the conducted state and the other disconnector 60 to be in the cut-off state.

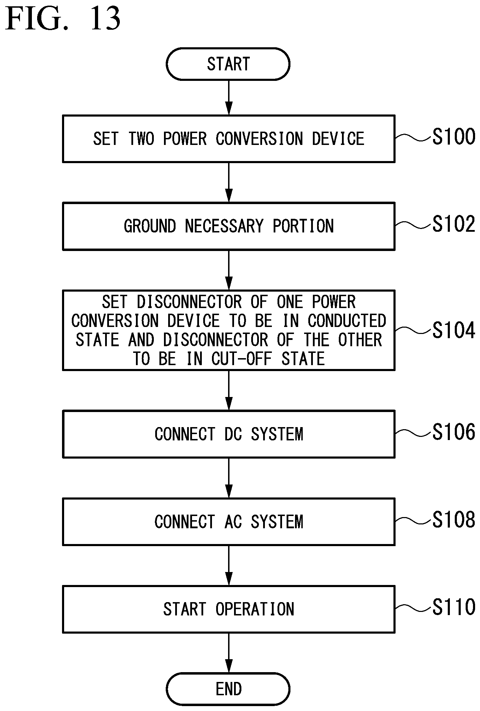

FIG. 13 is a flowchart which shows an example of a flow of a work procedure at the time of starting an operation of the power conversion system shown in FIG. 12.

First, two power conversion devices are installed (step S100). Next, necessary portions of each power conversion device are grounded (step S102). Next, the disconnector 60 of one power conversion device is set to be in the conducted state and the disconnector 60 of the other power conversion device is set to be in the cut-off state (step S104).

Next, the DC system 110 is connected to each of the two power conversion devices (step S106), and two AC systems 100 are connected to each of this two power conversion devices (step S108). Then, operations of the two power conversion devices are started (step S110).

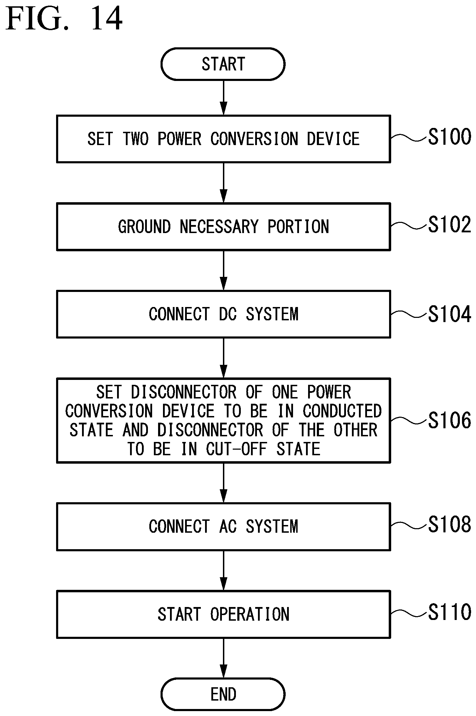

Of the above description, work procedures of step S104 and step S106 may be reversed. FIG. 14 is a flowchart which shows another example of the flow of the work procedure at the time of starting an operation of the power conversion system shown in FIG. 12.

First, two power conversion devices are installed (step S100). Next, the necessary portions of each power conversion device are grounded (step S102). Next, the DC system 110 is connected to each of the two power conversion devices (step S104), and the disconnector 60 of one power conversion device is set to be in the conducted state and the disconnector 60 of the other power conversion device is set to be in the cut-off state (step S106).

Next, the two AC systems 100 are connected to the two power conversion devices, respectively (Step S108). Then, the operations of the two power conversion devices are started (step S110). As a result, it is possible to prevent a situation with no grounding from occurring in both the two power conversion devices.

<Second embodiment>

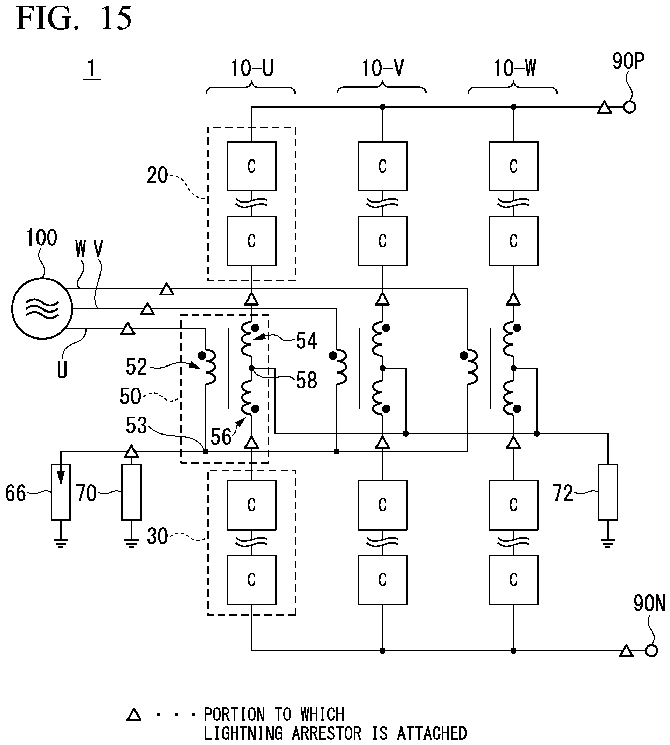

Hereinafter, a second embodiment will be described. In the following description, parts the same as those in the first embodiment will be denoted by the same reference numerals, and detailed description thereof will be omitted. FIG. 15 is a configuration diagram of a power conversion device 2 according to the second embodiment.

In the power conversion device 2, some or all of the following points (1) to (3) are different from in the power conversion device 1 of the first embodiment.

(1) The negative sides (the neutral points, hereinafter, neutral points 53) of the secondary windings 52 of three phases are, for example, short-circuited and connected with each other, and grounded via a member 70. The member 70 is one of the following.

(A) A neutral point ground resistor (NGR) with low resistance in a range in which an insulation withstand voltage is not affected

(B) A line for realizing an A-typed grounding (grounding at 10 [Ω] or less), effective grounding, and direct grounding

(2) The neutral point 58 is grounded via an fault current limiting resistor 72. The fault current limiting resistor 72 has a resistance value that can limit fault current such that each arm 10 is not destroyed due to the fault current. As described in the modified example 2, it is desirable to determine the resistance value of the fault current limiting resistor 72 such that, in particular, the fault current is within an allowable current resistance value of the diode 44.

(3) Some or all of the following points are grounded via the lightning arrestor 66. In FIG. 15, the following portions are indicated by triangle marks, and the lightning arrestor 66 is representatively shown only for (a).

(a) The neutral point 53 (however, it is not necessary if the number 70 is not NGR)

(b) A portion between an AC system and the secondary winding 52 for each of the three phases

(c) A portion between the positive-side arm 20 and the positive-side primary winding 54 for each of the three phases

(d) A portion between the negative-side arm 20 and the negative-side primary winding 56 for each of the three phases

(e) Near the positive-side DC terminal 90P and the negative-side DC terminal 90N

According to the configuration described above, the same effects as in the first embodiment can be achieved, and it is possible to maintain an operation efficiency within a range in which an insulation withstand voltage can be secured. In addition, even if not only a voltage regularly applied but also a surge overvoltage due to lightning and the like have acted on the power conversion device, it is possible to set an insulation withstand voltage of an apparatus to be within an appropriate range by clamping a maximum voltage.

[Usage example of second embodiment]

FIG. 16 is a diagram which shows a usage example of a power conversion device 2 according to a second embodiment. As shown in FIG. 16, two power conversion devices 2(1) and 2(2) are used as a set. A power conversion device 2(1) is connected to the AC system 100(1) and a power conversion device 2(2) is connected to the AC system 100(2). The AC system 100(1) and the AC system 100(2) are, for example, two AC systems having different frequencies.

A positive-side DC terminal 90P of the power conversion device 2(1) and a positive-side DC terminal 90P of the power conversion device 2(2) are connected with each other via the DC system 110P. The DC system 110P is grounded via the lightning arrestor 66. In the example of FIG. 15, one lightning arrestor 66 is attached to the positive-side DC terminal 90P of one power conversion device 2, but the lightning arrestor 66 is shared by two power conversion devices 2 in the example of FIG. 15. As a result, the cost and installation space of the apparatus can be reduced.

The negative-side DC terminal 90N of the power conversion device 2(1) and the negative-side DC terminal 90N of the power conversion device 2(2) are connected via the DC system 110N. The DC system 110N is grounded via the lightning arrestor 66. In the example of FIG. 15, one lightning arrestor 66 is attached to the negative-side DC terminal 90N of one power conversion device 2, but the lightning arrestor 66 is shared by two power conversion devices 2 in the example of FIG. 15. As a result, the cost and installation space of the apparatus can be reduced.

Furthermore, the neutral point 58 of the power conversion device 2(1) and the neutral point 58 of the power conversion device 2(2) are connected with each other by a neutral point connection line 110C. The neutral point connection line 110C is grounded via the fault current limiting resistor 72. In the example of FIG. 15, one fault current limiting resistor 72 is attached to the neutral point 58 of one power conversion device 2, but the fault current limiting resistor 72 is shared by two power conversion devices 2 in the example of FIG. 15. As a result, the cost and installation space of the apparatus can be reduced.

In addition, a switch 74 (1) is provided between the fault current limiting resistor 72 and the power conversion device 2(1) in the neutral point connection line 110C. A switch 74(2) is provided in a portion between the fault current limiting resistor 72 and the power conversion device 2(2) in the neutral point connection line 110C. These switches are controlled such that they change from an off state to an on state when the power conversion devices 2(1) and 2(2) are set and the necessary portions are grounded, and one is controlled such that it is brought into the off state after the DC system is connected. In FIG. 14, the "disconnector" in step S106 is replaced with the "switch," and thereby a method of using the power conversion device 2 can be obtained. In this state, one of the power conversion device 2(1) and the power conversion device 2(2) is in a state in which the neutral point is not directly grounded, but since the power conversion device 2(1) and the power conversion device 2(2) have a symmetrical structure if the neutral point of the other power conversion device is grounded, the neutral point is maintained at a potential close to the ground potential.

As a result, the power conversion device 2(1), the DC systems 110P and 110N, and the power conversion device 2(2) constitute a power conversion system that converts alternating current into alternating current.

According to at least one embodiment described above, a power conversion device includes arms (10-U, 10-V, and 10-W) corresponding to each of three phases, and each arm includes a positive-side arm (20) in which a plurality of converters (C) including a plurality of switching elements (41 and 42) connected in series and a capacitor (46) connected in parallel to the plurality of switching elements connected in series are connected with each other in series, and whose one end is connected to a positive-side DC terminal (90P), a first primary winding (54) which is provided between the other end of the positive-side arm and a neutral point (58), and is magnetically coupled with a secondary winding (52) of a corresponding phase, a negative-side arm in which the plurality of converters are connected with each other in series and whose one end is connected to a negative-side DC terminal (90N), and a second primary winding (56) which is provided between the other end of the negative-side arm and the neutral point and is magnetically coupled with the secondary winding as is the first primary winding, in which neutral points of the each arm are connected with each other and grounded, and the neutral point (53) of the secondary winding (52) is also grounded, and thus it is possible to use components with low insulation withstand voltages while curbing an increase in size and costs of a device.

Although several embodiments of the present invention have been described, these embodiments are presented by way of example and are not intended to limit the scope of the invention. These embodiments can be implemented in various other forms, and various omissions, replacements, and changes can be made within a range not departing from the gist of the invention. These embodiments and modifications thereof are included in the invention described in the claims and the equivalents thereof as well as in the scope and gist of the invention.

For example, it is described in a flowchart of a "usage example" that the "DC system 110 is connected to each of the two power conversion devices (step S106), and two AC systems 100 are connected to each of the two power conversion devices (step S08)." However, instead of this, there may be a form of "the two AC systems 100 are first connected to each of the two power conversion devices (step S108) and then the DC system 110 is connected to each of the two power conversion devices (step S106)."

**Claims**

1. A power conversion device comprising:

   arms corresponding to each of three phases,
   wherein each arm includes
   a positive-side arm in which a plurality of converters including a plurality of switching elements connected in series and a capacitor connected in parallel to the plurality of switching elements connected in series are connected with each other in series, and whose one end is connected to a positive-side DC terminal;
   a first primary winding which is provided between the other end of the positive-side arm and a neutral point, and is magnetically coupled with a secondary winding of a corresponding phase;
   a negative-side arm in which the plurality of converters are connected with each other in series and whose one end is connected to a negative-side DC terminal; and
   a second primary winding which is provided between the other end of the negative-side arm and the neutral point, and is magnetically coupled with the secondary winding common to the first primary winding,
   wherein neutral points of the each arm are connected with each other and grounded, and
   a neutral point of the secondary winding is also grounded.

2. The power conversion device according to claim 1,
   wherein the neutral points of the each arm are connected with each other and grounded via a disconnector.

3. The power conversion device according to claim 1,
   wherein the neutral points of the each arm are connected with each other and grounded via a disconnector and a resistor provided in parallel.

4. The power conversion device according to claim 1,
   wherein the neutral points of the each arm are connected to a connection point via the disconnector and the resistor provided in parallel and grounded before the connection point.

5. The power conversion device according to claim 1, further comprising:
   a stable winding which is included in a transformer including the first primary winding, the second primary winding, and the secondary winding, and is connected to each other between the phases.

6. The power conversion device according to claim 1,
   wherein the neutral points of the each arm are connected to each other and grounded via a disconnector and an arrester provided in parallel.

7. A power conversion system comprising:

   two power conversion devices according to any one of claims 1 to 6,
   wherein positive-side DC terminals of the two power conversion devices are connected to each other,
   negative-side DC terminals of the two power conversion devices are connected to each other, and
   AC sides of the two power conversion devices are connected to different AC systems.

8. A method of using a power conversion system including two power conversion devices according to any one of claims 2 to 4, and 6 comprising:
   starting operations of the two power conversion devices with a disconnector of a first power conversion device among the two power conversion devices set to be in a conducted state and a disconnector of a second power conversion device among the two power conversion devices set to be in a cut-off state.

9. The power conversion device according to claim 1,
   wherein a neutral point of the secondary winding is grounded via an NGR or by grounding at $10\Omega$ or less or effective grounding.

10. The power conversion device according to claim 1 or 9,
wherein the neutral points of the each arm are grounded via an fault current limiting resistor.

11. The power conversion device according to claim 1,9, or 10,
wherein some or all of the following portions are grounded via a lightning arrestor:

(a) a neutral point of the secondary winding,
(b) a portion between the AC system and the secondary winding for each of the three phases,
(c) a portion between the positive-side arm and the first primary winding for each of the three phases,
(d) a portion between the negative-side arm and the second primary winding for each of the three phases, and
(e) a positive-side DC terminal and a negative-side DC terminal.

12. A power conversion system comprising:

two power conversion devices according to claim 10,
wherein positive-side DC terminals of the two power conversion devices are connected with each other,
negative-side DC terminals of the two power conversion devices are connected with each other,
neutral points of each arm of the two power conversion devices are connected with each other, a line connecting the neutral points is grounded via one fault current limiting resistor shared by the two power conversion devices, and
AC sides of the two power conversion devices are connected to different AC systems.

13. The power conversion system according to claim 12,
wherein a first switch is provided between a first power conversion device among the two power conversion devices and the fault current limiting resistor in the line connecting the neutral points, and
a second switch is provided between a second power conversion device among the two power conversion devices and the fault current limiting resistor in the line connecting the neutral points.

14. A method of using the power conversion system according to claim 13 comprising:
starting operations of the two power conversion devices with the first switch set to be in a conducted state and the second switch set to be in a cut-off state.

15. A power conversion system comprising:

two power conversion devices according to claim 11,
wherein positive-side DC terminals of the two power conversion devices are connected with each other, and a line connecting the positive-side DC terminals is grounded via one lightning arrestor shared by the two power conversion devices,
negative-side DC terminals of the two power conversion devices are connected with each other, and a line connecting the negative-side DC terminals is grounded via the one lightning arrestor shared by the two power conversion devices, and
AC sides of the two power conversion devices are connected to different AC systems.

FIG. 1

# FIG. 2

C

40

41

43

46

42

44

# FIG. 3

50

Up          Vp          Wp

54

58

POSITIVE-
SIDE

PRIMARY
(WINDING)

Un          Vn          Wn

NEGATIVE-
SIDE

56

Us

52

Vs

Ws

SECONDARY

M

FIG. 4

# FIG. 5

(A)

VOLTAGE

$2 \times Vdc$  VuP

V0

Vdc

(B)

VOLTAGE

$2 \times Vdc$  VuN

V0

Vdc

FIG. 6

(A)

VtrP1

(B)

VtrN1

(C)

Vtr2

FIG. 7

# FIG. 8

FIG. 9

EP 3 678 289 A1

FIG. 10

FIG. 11

FIG. 12

EP 3 678 289 A1

FIG. 13

```
           ┌─────────────┐
           │    START    │
           └──────┬──────┘
                  │
                  ▼
   ┌────────────────────────────────┐
   │  SET TWO POWER CONVERSION DEVICE │─── S100
   └────────────────┬────────────────┘
                    │
                    ▼
   ┌────────────────────────────────┐
   │     GROUND NECESSARY PORTION    │─── S102
   └────────────────┬────────────────┘
                    │
                    ▼
   ┌────────────────────────────────┐
   │  SET DISCONNECTOR OF ONE POWER  │
   │ CONVERSION DEVICE TO BE IN CONDUCTED │─── S104
   │ STATE AND DISCONNECTOR OF THE OTHER │
   │     TO BE IN CUT-OFF STATE       │
   └────────────────┬────────────────┘
                    │
                    ▼
   ┌────────────────────────────────┐
   │        CONNECT DC SYSTEM        │─── S106
   └────────────────┬────────────────┘
                    │
                    ▼
   ┌────────────────────────────────┐
   │        CONNECT AC SYSTEM        │─── S108
   └────────────────┬────────────────┘
                    │
                    ▼
   ┌────────────────────────────────┐
   │         START OPERATION         │─── S110
   └────────────────┬────────────────┘
                    │
                    ▼
           ┌─────────────┐
           │     END     │
           └─────────────┘
```

# FIG. 14

```
      START
        │
        ▼
┌──────────────────────────┐
│ SET TWO POWER CONVERSION DEVICE │───S100
└──────────────────────────┘
        │
        ▼
┌──────────────────────────┐
│   GROUND NECESSARY PORTION     │───S102
└──────────────────────────┘
        │
        ▼
┌──────────────────────────┐
│      CONNECT DC SYSTEM         │───S104
└──────────────────────────┘
        │
        ▼
┌──────────────────────────┐
│ SET DISCONNECTOR OF ONE POWER  │
│ CONVERSION DEVICE TO BE IN CONDUCTED │───S106
│ STATE AND DISCONNECTOR OF THE OTHER  │
│    TO BE IN CUT-OFF STATE       │
└──────────────────────────┘
        │
        ▼
┌──────────────────────────┐
│      CONNECT AC SYSTEM         │───S108
└──────────────────────────┘
        │
        ▼
┌──────────────────────────┐
│       START OPERATION          │───S110
└──────────────────────────┘
        │
        ▼
        END
```

# FIG. 15

△ ··· PORTION TO WHICH
LIGHTNING ARRESTOR IS ATTACHED

FIG. 16

**EP 3 678 289 A1**

## INTERNATIONAL SEARCH REPORT

| | International application No. |
|---|---|
| | PCT/JP2018/006402 |

**A. CLASSIFICATION OF SUBJECT MATTER**
Int.Cl. H02M7/49(2007.01)i

According to International Patent Classification (IPC) or to both national classification and IPC

**B. FIELDS SEARCHED**

Minimum documentation searched (classification system followed by classification symbols)
Int.Cl. H02M7/49

Documentation searched other than minimum documentation to the extent that such documents are included in the fields searched
Published examined utility model applications of Japan   1922-1996
Published unexamined utility model applications of Japan   1971-2018
Registered utility model specifications of Japan   1996-2018
Published registered utility model applications of Japan   1994-2018

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| Y<br>A | JP 2014-143864 A (HITACHI, LTD.) 07 August 2014,<br>paragraphs [0168]-[0195], fig. 2, 12, 13<br>& US 2014/0211528 A1, paragraphs [0167]-[0194],<br>fig. 2, 12, 13 & CN 103973139 A | 1-9, 11<br>10, 12-15 |
| Y | JP 2011-193615 A (HITACHI, LTD.)29 September 2011,<br>paragraph [0043], fig. 1<br>& JP 2013-255422 A & WO 2011/114816 A1 & EP<br>2549634 A1, paragraph [0043], fig. 1 & CN<br>102771038 A | 1-9, 11 |

☒ Further documents are listed in the continuation of Box C.    ☐ See patent family annex.

| | | |
|---|---|---|
| * | Special categories of cited documents: | |
| "A" | document defining the general state of the art which is not considered to be of particular relevance | |
| "E" | earlier application or patent but published on or after the international filing date | |
| "L" | document which may throw doubts on priority claim(s) or which is cited to establish the publication date of another citation or other special reason (as specified) | |
| "O" | document referring to an oral disclosure, use, exhibition or other means | |
| "P" | document published prior to the international filing date but later than the priority date claimed | |

"T" later document published after the international filing date or priority date and not in conflict with the application but cited to understand the principle or theory underlying the invention

"X" document of particular relevance; the claimed invention cannot be considered novel or cannot be considered to involve an inventive step when the document is taken alone

"Y" document of particular relevance; the claimed invention cannot be considered to involve an inventive step when the document is combined with one or more other such documents, such combination being obvious to a person skilled in the art

"&" document member of the same patent family

| Date of the actual completion of the international search | Date of mailing of the international search report |
|---|---|
| 10.04.2018 | 24.04.2018 |

| Name and mailing address of the ISA/ | Authorized officer |
|---|---|
| Japan Patent Office<br>3-4-3, Kasumigaseki, Chiyoda-ku,<br>Tokyo 100-8915, Japan | Telephone No. |

Form PCT/ISA/210 (second sheet) (January 2015)

# EP 3 678 289 A1

**INTERNATIONAL SEARCH REPORT**

International application No.

PCT/JP2018/006402

C (Continuation).  DOCUMENTS CONSIDERED TO BE RELEVANT

| Category* | Citation of document, with indication, where appropriate, of the relevant passages | Relevant to claim No. |
|---|---|---|
| Y | US 2013/0182467 A1 (ALSTOM TECHNOLOGY LTD.) 18 July 2013, paragraph [0063], fig. 2<br>& WO 2011/098117 A1 | 1-9, 11 |
| Y | JP 2016-208743 A (TOSHIBA CORPORATION) 08 December 2016, paragraphs [0035]-[0040], fig. 5<br>& WO 2016/170869 A1 | 2-4, 8 |
| Y | JP 56-057966 A (SUMITOMO ELECTRIC INDUSTRIES, LTD.) 20 May 1981, page 1, lower right column, line 6 to page 2, upper left column, line 11, fig. 1<br>(Family: none) | 6, 8 |
| Y | JP 6-303725 A (TOSHIBA CORPORATION) 28 October 1994, paragraphs [0003], [0010], fig. 1, 4<br>(Family: none) | 8 |
| Y | JP 58-186302 A (TOKYO SHIBAURA ELECTRIC CO., LTD.) 31 October 1983, page 2, upper left column, lines 2-16, fig. 1<br>(Family: none) | 11 |
| A | JP 2013-099054 A (HITACHI, LTD.) 20 May 2013, paragraphs [0121]-[0130], fig. 6<br>(Family: none) | 1-15 |

Form PCT/ISA/210 (continuation of second sheet) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 5881386 B